# EUROPEAN PATENT APPLICATION

(11) **EP 4 769 758 A1**
(43) Date of publication of application: **01.07.2026**
(21) Application number: 24877573.6
(22) Date of filing: 11.10.2024
(51) Int. Cl.: H01M 50/358, H01M 50/383, H01M 50/271

(54) **BATTERY MODULE**

(30) Priority: 12.10.2023 KR 20230136131
(71) Applicant: LG ENERGY SOLUTION, LTD., Seoul 07335 (KR)
(72) Inventor: HEO, Samhoe, Daejeon 34122 (KR); JUNG, Kitaek, Daejeon 34122 (KR); CHOI, Wansup, Daejeon 34122 (KR); PARK, Dongho, Daejeon 34122 (KR); PARK, Jeongjae, Daejeon 34122 (KR)
(74) Representative: BCKIP Part mbB
(86) International application number: PCT/KR2024/015443
(87) International publication number: WO 2025/080038

(57) **Abstract**

A battery module is disclosed. The battery module includes a module housing provided with a plurality of battery bank accommodating one or more battery cells therein, respectively, and a top plate provided with long sides and short sides and covering an upper portion of the module housing. , the battery module further includes: venting slit groups arranged at two lengthwise end portions of the top plate, respectively, each of the pair of venting slit groups including a plurality of venting slits arranged in short side direction; and at least one venting hole group arranged between the venting slit groups, each of the at least one venting hole group including a plurality of venting holes, wherein a short side direction width of each of the plurality of venting slits of the pair of venting slit groups is narrower than that of the venting holes of each of the at least one venting hole group in the short side direction.

## Description

### [TECHNICAL FIELD]

This application claims the benefit of priority based on Korean Patent Application No. 10-2023-0136131 filed on October 12, 2023, entire content disclosed in the document of the patent applications is included as a part of this specification.

The present invention relates to a battery module capable of preventing structural collapse when thermal runaway or thermal runaway propagation occurs, and securing rigidity for withstanding vibration or shock while allowing smooth gas and flame discharge.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic battery cells and pouch-type battery cells that may be applied to products such as mobile phones due to their thin thickness. In terms of materials of battery cells, demand is increasing for lithium battery cells such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these battery cells may be approximately 2.5V to 4.2V. When a higher output voltage is required, a battery module is constituted by connecting multiple battery cells in series. In addition, a battery package is constituted by connecting multiple battery modules in series. In addition, a battery package is constituted by connecting multiple battery cells in parallel according to the charge and discharge capacity required for the battery package. The number of battery cells and the electrical connection structure of the battery package may be selected in various ways according to the required output voltage or charge and discharge capacity.

In the battery pack, terminals of a plurality of battery modules are installed at the module frame so as to be exposed, and terminals of adjacent battery modules are electrically connected by terminal bus bars.

When the battery module is charged, a plurality of battery cells expand, and when the battery module is discharged, the plurality of battery cells contract. The amount of expansion of the battery cell varies depending on the position in the lengthwise direction of the battery cell. That is, the amount of expansion of the lengthwise center of the battery cell is relatively large compared to the amount of expansion of the lengthwise end portions of the battery cell.

A top plate is installed in the battery module to cover the upper portion of the battery housing. A bus bar terminal is installed on the front portion of the battery housing so as to be exposed. A plurality of venting holes are provided in the top plate. The plurality of venting holes provided in the top plate have the same width. When thermal runaway and thermal runaway propagation of the battery module occur, gas and flame are generated, and the gas and flame are discharged out of the battery module through the plurality of venting holes.

When thermal runaway occurs in the battery module, the fluidity of gas and flame near the long side direction center of the battery module relatively increases compared to the fluidity near the two lengthwise end portions. It may be seen that the amount of discharged gas and flame relatively increases in the venting holes of the long side direction center of the top plate.

However, since almost all venting holes in the top plate uniformly have the same width conventionally, the rigidity of the top plate may be relatively degraded. That is, while the amount of discharged gas and flame is relatively small near the two lengthwise end portions of the top plate, the venting holes near the two end portions are unnecessarily large such that the rigidity of the top plate may be relatively degraded.

In addition, when thermal runaway or thermal runaway propagation of the battery module occurs, flame may be discharged out of the battery module through the venting holes near the two end portions of the top plate. In such case, since the flame discharged to the outside degrades the battery module, the possibility of structural collapse of the battery module may increase.

When multiple battery modules are installed in a battery pack, the flame discharged from the two lengthwise end portions of the top plate may move to the neighboring battery module. In such case, the battery module close to the two lengthwise end portions of the top plate may be directly exposed to the flame, which may increase the possibility of a short circuit.

The background technology of the present invention is disclosed in Korean Patent Application Publication No. 2023-0083823 (published on June 12, 2023) titled Flame Blocking Unit and Battery Pack. According to the Publication, disclosed is a battery pack having a structure almost without venting holes at two lengthwise end portions of the top cover to increase structural rigidity. In such battery pack, the gas and flame discharge performance at two lengthwise end portions may be significantly reduced when thermal runaway occurs.

### [DISCLOSURE]

### [TECHNICAL PROBLEM]

In order to solve above-described problems, it is an object of the present invention to provide a battery module capable of reinforcing rigidity by increasing uncut area in the two lengthwise end portions of a top plate.

It is an object of the present invention to provide a battery module capable of suppressing flame from being discharged through the two lengthwise end portions of the top plate.

It is an object of the present invention to provide a battery module capable of preventing structural collapse of the battery module due to flame discharged to the outside.

It is an object of the present invention to provide a battery module capable of increasing the discharge performance of exhausted matter such as gas and flame.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The battery module includes a module housing provided with a plurality of battery bank accommodating one or more battery cells therein, respectively, and a top plate provided with long sides and short sides and covering an upper portion of the module housing.

The battery module further includes: a pair of venting slit groups arranged on both sides of the top plate in long side direction, respectively; and at least one venting hole group arranged between the pair of venting slit groups in long side direction.

Each of the pair of venting slit groups includes a plurality of venting slits arranged in short side direction.

Each of the at least one venting hole group includes a plurality of venting holes.

In order to solve above-described problems, a short side direction width of each of the plurality of venting slits of the pair of venting slit groups is narrower than a short side direction width of each of the venting holes of the at least one venting hole group.

The venting slits of the pair of venting slit groups and the venting holes of the at least one venting hole group may be arranged in line along a long side direction of the top plate.

In some embodiments, within the pair of venting slit groups, long side direction lengths of outermost venting slits with respect to the short side direction of the top plate may be longer than a long side direction length of at least one venting slit arranged between the outermost venting slits.

In some embodiments, within the pair of venting slit groups, long side direction lengths of outermost venting slits with respect to the short side direction of the top plate may be longer than long side direction lengths of venting slits arranged between the outermost venting slits.

In some embodiments, within the at least one venting hole group, long side direction lengths of outermost venting holes with respect to the short side direction of the top plate may be longer than a long side direction length of at least one venting hole arranged between the outermost venting holes.

In some embodiments, within the at least one venting hole group, long side direction lengths of outermost venting holes with respect to the short side direction of the top plate may be longer than long side direction lengths of venting holes arranged between the outermost venting holes.

Outermost interval sections are defined as interval portions extending in a long side direction between outermost venting slits and outermost venting holes arranged at two widthwise end portions of the top plate. Inner interval sections are defined as interval portions extending in the long side direction between the plurality of venting slits and the plurality of venting holes arranged between the outermost venting slits and the outermost venting holes. The outermost interval sections and the inner interval sections may not be overlapped with each other in the long side direction.

A plurality of series of vents may be defined by the plurality of venting slits of the pair of venting slit groups and the plurality of venting holes of the at least one venting hole groups which are arranged in series along the long side direction of the top plate. The plurality of series of vents may be arranged along the short side direction of the top plate.

In some embodiments, one series of vents corresponds to one battery bank.

In some embodiments, two or more series of vents correspond to one battery bank.

### [ADVANTAGEOUS EFFECTS]

According to the present invention, since the venting slit group is arranged at the two lengthwise end portions of the top plate, the rigidity of the top plate may be increased as the widths of the plurality of venting slits are narrowed. That is, the rigidity may be reinforced by increasing the uncut area at the two lengthwise end portions of the top plate.

According to the present invention, since the venting slit group is arranged at the two lengthwise end portions of the top plate, flame may be suppressed from being discharged through the two lengthwise end portions of the top plate.

According to the present invention, since flame is suppressed from being discharged at the two lengthwise end portions of the top plate, the battery module may be prevented from structural collapse by the flame discharged to the outside.

According to the present invention, since the venting slits and venting holes are arranged in series above the battery bank between adjacent thermal barriers, the discharge performance of exhausted matter such as gas and flame may be increased.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery module according to the present invention.
FIG. 2 is an exploded perspective view schematically illustrating a battery module according to the present invention.
FIG. 3 is a plan view schematically illustrating an internal structure of a battery module according to the present invention.
FIG. 4 is a plan view schematically illustrating a top plate of a battery module according to the present invention.
FIG. 5 is a plan view schematically illustrating a structure having two series of vents corresponding to one battery bank in a battery module according to the present invention.
FIG. 6 is a plan view schematically illustrating a structure having one series of vents corresponding to one battery bank in a battery module according to the present invention.
FIG. 7 is a plan view schematically illustrating a structure having three series of vents corresponding to one battery bank in a battery module according to the present invention.

### [DESCRIPTION OF REFERENCE NUMERALS]

100: battery module
111: battery cell
112: lead
113: thermal barrier
115: battery bank
120: module housing
121: module frame
122: front end plate
123: rear end plate
124: thermal pad
125: bus bar
126: bus bar frame
127: bus bar terminal
130: top plate
131: venting slit group
131a: outermost venting slit
131b: inner venting slit
133: venting hole group
133a: outermost venting hole
133b: inner venting hole
135: series of vents
137: outermost interval section
138: inner interval section

### [DETAILED DESCRIPTION OF THE PREFERRED EMBODIMENTS]

Hereinafter, preferred embodiments of the present invention will be described with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery module 100 according to an embodiment of the present invention will be described.

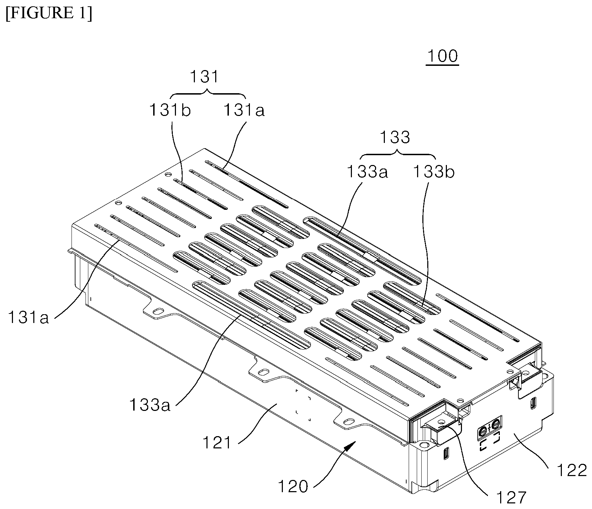

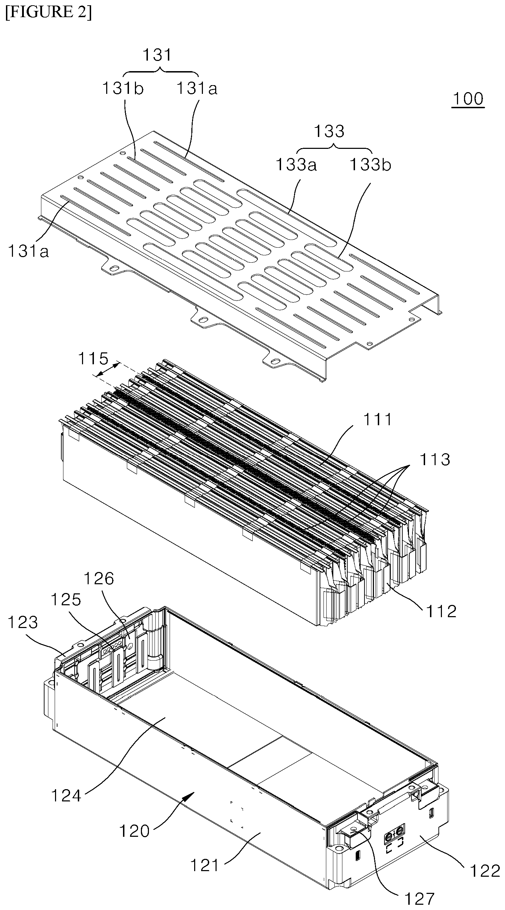

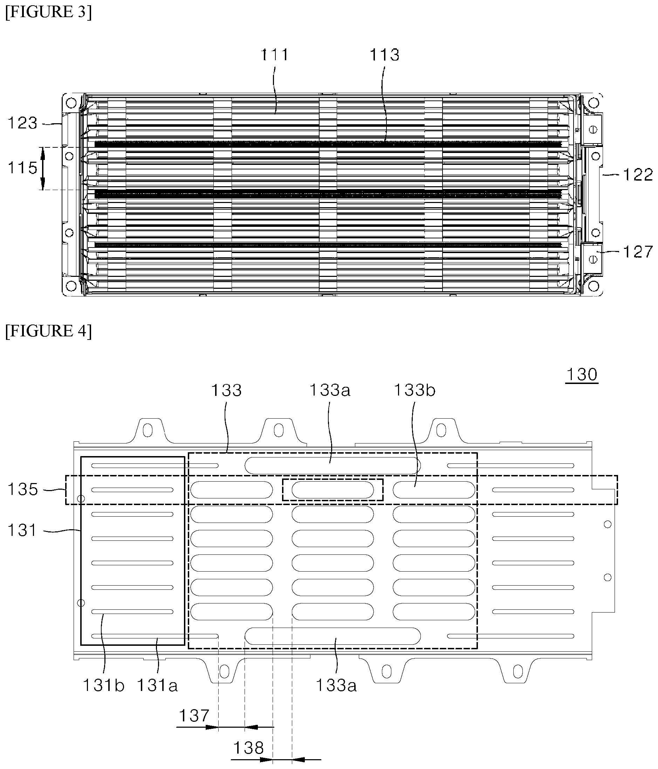

FIG. 1 is a perspective view schematically illustrating a battery module according to the present invention, FIG. 2 is an exploded perspective view schematically illustrating a battery module according to the present invention, FIG. 3 is a plan view schematically illustrating an internal structure of a battery module according to the present invention, and FIG. 4 is a plan view schematically illustrating a top plate of a battery module according to the present invention.

Referring to FIGS. 1 to 4, a battery module 100 according to an embodiment of the present invention includes a module housing 120 and a top plate 130.

A plurality of battery cells 111 are stacked in an accommodating space of the module housing 120. For example, the plurality of battery cells 111 parallel to the long side of the module housing 120 may be stacked in the short side direction of the module housing 120.

The battery cell 111 may be a pouch type having an electrode laminate (not shown) accommodated therein. In addition, the battery cell 111 may be a prismatic type having an electrode laminate accommodated therein. In addition, the battery cell 111 may be a type having cylindrical secondary batteries arranged therein. When the battery cell 111 is a cylindrical cell, the battery cells 111 may be arranged in the long side direction and the short side direction of the module housing 120.

When the battery cell 111 is a pouch type cell, one unit pouch cell may constitute one battery cell 111. In addition, when the battery cell 111 is a prismatic battery cell, a row of unit prismatic type cells may constitute one battery cell 111. In addition, even when the battery cell 111 is a cylindrical cell, a row of unit cylindrical cells may constitute one battery cell 111.

The pouch of the pouch cell includes a metal film layer, an outer resin layer stacked on the outer surface of the metal film layer, and an insulating layer stacked on the inner surface of the metal film layer. The metal film layer may include aluminum foil or a copper film, etc. The outer resin layer may be made of nylon or polyethylene terephthalate, which have excellent mechanical strength to protect from the outside. The insulating layer has thermal bonding properties and acts as an adhesive. The insulating layer may be made of polypropylene, polyolefin, C-PP (Casted Polypropylene), methacrylate, etc.

The battery cell 111 is formed by sequentially stacking a cathode, a separator and an anode. In addition, an electrolyte is accommodated inside the battery cell 111. A plurality of leads 112 protrude from both sides of the battery cell 111, and the plurality of leads 112 are connected to a bus bar 125 (not shown). Apparently, leads 112 of different polarities may be connected to protrude from one lengthwise end portion of the battery cell 111.

The thermal barrier 113 may be interposed between one or more battery cells 111. The thermal barrier 113 blocks flames from moving toward the neighboring battery cell 111. The thermal barrier 113 may delay the thermal runaway when flames are generated in the battery module 100.

A battery bank 115 is provided such that one or more battery cells 111 are installed between adjacent thermal barriers 113. The battery bank 115 may be defined as a space in which the battery cell 111 is installed. The battery banks 115 parallel to the long side direction of the module housing are arranged in the short side direction of the module housing.

For example, when the battery cell 111 is a pouch cell, one or more pouch-type battery cells may be arranged in each battery bank 115. In addition, when the battery cell 111 is a prismatic type cell, a plurality of prismatic battery cells may be arranged in a single row or multiple columns in each battery bank 115. In addition, when the battery cell 111 is a cylindrical cell, each battery bank 115 may have a plurality of cylindrical cells arranged in a single row or multiple columns. In this way, according to the present invention, the battery bank 115 is a space where the battery cells are arranged, and the structure, shape or the number of the battery cells arranged in the battery bank 115 may be variously changed.

The thermal barrier 113 may include at least one of silicone, polyurethane and aerogel.

Polyurethane foam is a porous polymer compound formed by a gelling reaction and a blowing reaction with carbon dioxide gas. Since polyurethane foam is formed with carbon dioxide and a porous structure, the load of the thermal barrier 113 may be significantly reduced while improving the insulation efficiency. In addition, the physical properties of polyurethane foam are hardly changed by the heat generated from the battery cell 111.

Aerogel is a porous nanostructure obtained by replacing the liquid in the gel structure with air while maintaining the gel structure. Aerogel is composed of nanoparticles with a size of 1-50nm. In addition, since aerogel is composed of approximately 99.8% air and silicon dioxide (SiO2) of 1/10,000nm, aerogel is significantly light and has significantly excellent insulation properties. Such aerogel thermal barrier 113 may significantly reduce the load while improving the insulation efficiency. In addition, since the aerogel is composed of air and silicon dioxide, changes in physical properties or deformation due to heat generated from the battery cell 111 may be minimized.

The module housing 120 includes a module frame 121 having open upper portion, front end portion and rear end portion. The module frame 121 is made of a thermally conductive material such as aluminum. The module frame 121 is also referred to as a U frame. A front end plate 122 is coupled to the front end portion of the module frame 121. A rear end plate 123 is coupled to the rear end portion of the module frame 121. The front end plate 122 and the rear end plate 123 may have a rectangular plate shape.

A thermal pad 124 is installed on the bottom surface of the module frame 121. The thermal pad 124 supports the lower portion of the plurality of battery cells 111. The thermal pad 124 is made of a thermally conductive material. The thermal pad 124 dissipates heat generated from the plurality of battery cells 111 through the bottom surface of the module housing 120. The module frame 121 has long sides and short sides.

A bus bar frame 126 is installed on the inner side surfaces of the front end plate 122 and the rear end plate 123. A plurality of bus bars 125 made of a conductive material are installed at the bus bar frame 126. The plurality of bus bars 125 may have a rectangular frame shape. Leads 112 of some battery cells 111 are welded to the bus bar 125. Above the front end plate, a pair of bus bar terminals 127 electrically connected to the bus bar 125 are installed. The pair of bus bar terminals 127 are installed so as to be exposed.

The top plate 130 covers the upper portion of the module frame 121. The top plate 130 may be rectangular having long sides and short sides. On the two long sides of the top plate 130, a flange bent downward is provided along the long side direction of the top plate 130. The top plate 130 may be made of the same material as the module frame 121.

The top plate 130 includes a venting slit group 131 and a venting hole group 133.

The venting slit group 131 includes a plurality of venting slits 131a and 131b arranged in the short side direction at two lengthwise end portions of the top plate 130. The plurality of venting slits 131a and 131b have a narrow width that allows gas to pass through while suppressing flame discharge.

The venting hole group 133 is arranged between a pair of venting slit groups 131 along the long side direction of the top plate 130 and includes a plurality of venting holes 133a and 133b. At least one venting hole group 133 is arranged between the pair of venting slit groups 131. The venting hole group 133 is arranged to be spaced apart from the venting slit group 131 toward the center portion. The plurality of venting holes 133a and 133b are arranged along the short side direction of the top plate 130. The plurality of venting holes 133a and 133b discharge gas and flame.

The short side direction widths of the venting slits 131a and 131b of the venting slit group 131 is narrower than those of the venting holes 133a and 133b of the venting hole group 133. The venting slits 131a and 131b may have widths that allow the gas to pass therethrough while almost shielding the flame. The pair of venting slit groups 131 are arranged at two lengthwise end portions of the top plate 130, respectively, where the discharge efficiency of the exhausted matter (gas and flame) is low. In addition, the pair of venting slit groups 131 suppress flame discharge through two lengthwise end portions (front end portion and rear end portion) of the top plate 130. That is, while an overall open area of the top plate 130 is reduced, flame discharge through the front end portion and rear end portion of the top plate 130 having low discharge efficiency of the exhausted matter may be suppressed. In addition, the top plate 130 guides flame discharge toward the long side direction center to discharge gas and flame in upward direction.

Preferably, the widths of the venting slits 131a and 131b may be 0.1 times or more and 0.5 times or less than those of the venting holes 133a and 133b. When the width of the venting slit is less than 0.1 times that of the venting hole, the gas discharge efficiency may be reduced, and when the width is greater than 0.5 times, there is a risk that the flame may be discharged through the venting slit and the strength of the top plate in the relevant area may be degraded.

Accordingly, the battery module 100 may be prevented from structurally collapsing due to the heating by the flame discharged to the outside. Furthermore, flame discharge may be suppressed at the two lengthwise end portions of the battery module 100. Therefore, when the battery module 100 according to the present invention is installed in a battery pack, the neighboring battery module 100 may be prevented from being short-circuited by the flame.

In addition, since the venting slit groups 131 are arranged at two lengthwise end portions of the top plate 130, the rigidity of the top plate 130 may be increased as the width of the plurality of venting slits 131a and 131b is narrowed.

The venting slits 131a and 131b of the venting slit group 131 and the venting holes 133a and 133b of the venting hole group 133 may be arranged in line along the long side direction of the top plate 130. Accordingly, since the venting slits 131a and 131b and the venting holes 133a and 133b are arranged in line above the battery bank 115, which is the space between the adjacent thermal barriers 113, the discharge performance of the exhausted matter may be increased.

The venting slits 131a and 131b of venting slit group 131 and the venting holes 133a and 133b of the venting hole group 133 described above are configured to discharge exhausted matter generated from one or more corresponding battery banks 115 out of the battery module 100. Therefore, the structure, shape and number of battery cells 111 accommodated in the battery bank 115 are not limited thereto according to the present invention.

Within the pair of venting slit groups 131, the long side direction length of the outermost venting slits 131a with respect to the short side direction of the top plate 130 may be longer than that of at least one venting slit 131b arranged between the outermost venting slits 131a. Since the outermost venting slit 131a is relatively long in the long side direction, the opening area at the peripheries of the two lengthwise end portions of the top plate 130 may be reduced. Accordingly, the rigidity of the top plate 130 may be increased. In addition, since the outermost venting slit 131a is provided at the periphery of the top plate 130, the flame discharge blocking area at the periphery of the top plate 130 may be expanded.

Preferably, within the pair of venting slit groups 131, the long side direction length of outermost venting slits 131a with respect to the short side direction of the top plate 130 may be longer than those of venting slits 131b arranged between the outermost venting slits 131a. That is, the long side direction length of the outermost venting slit 131a may be the longest.

Within the pair of venting hole groups, the long side direction length of outermost venting holes 133a with respect to the short side direction of the top plate 130 may be longer than that of at least one venting hole arranged between the outermost venting holes 133a. Accordingly, while the discharge performance of the exhausted matter is degraded as the length of the outermost venting slit 131a at the periphery of the top plate 130 increases, the discharge performance of the exhausted matter may be compensated for by making the length of the outermost venting hole 133a the longest.

Preferably, within the pair of venting hole groups 133, the long side direction length of outermost venting holes 133a with respect to the short side direction of the top plate 130 may be longer than those of venting holes arranged between the outermost venting holes 133a. That is, the long side direction length of the outermost venting hole 133a may be the longest.

The portion extending in the long side direction between the outermost venting slit 131a and the outermost venting hole 133a arranged on the two widthwise end portions of the top plate 130 is defined as the outermost interval section 137. The portion extending in the long side direction between the venting holes 133b arranged in the short side direction between the outermost venting slits 131a is defined as the inner interval section 138. According to the embodiment shown, along the long side direction, two outermost interval sections 137 and four inner interval sections 138 are provided. The section occupied by the outermost interval section 137 along the long side direction is arranged to be misaligned with the section occupied by the inner interval section 138 along the long side direction. That is, the outermost interval section 137 and the inner interval section 138 are arranged so as not to be aligned in the long side direction of the top plate 130. Since the outermost interval section 137 and the inner interval section 138 are misaligned in the long side direction of the top plate 130, the portion of the top plate 130 with low rigidity may be distributed.

When the outermost interval section 137 and the inner interval section 138 are aligned in the long side direction of the top plate 130, the rigidity deviation between the aligned section and the section in which a plurality of venting holes 133b are provided in the top plate 130 may significantly increase. As the rigidity deviation in the long side direction of the top plate 130 increases, the possibility of damage to the top plate 130 may increase. However, according to the present invention, the rigidity deviation in the long side direction of the top plate 130 may be reduced by dispersing the portion with low rigidity.

The length of the outermost venting slit 131a may be 1.3 times or more and 1.6 times or less than that of the venting slit 131b. The length of the inner interval section 138 between the venting slit 131b and the venting hole 133b may be 0.2 times or more and 0.3 times or less than that of the venting slit 131b. Accordingly, while securing the width of the non-cut region of the top plate 130, the inner interval section 138 between the venting slit 131b and the venting hole 133b is arranged to be misaligned with the outermost interval section 137 in the long side direction so as to secure the rigidity of the top plate 130, and the areas of the venting slits 131a and 131b and the venting holes 133a and 133b may be secured to sufficiently exert the venting function.

The length of the outermost interval section 137 may be set to be longer than that of the inner interval section 138. Accordingly, the rigidity of the two long sides of the top plate 130 may be further secured.

The number of the venting holes 133b may be greater than that of the outermost venting holes 133a in the long side direction. Preferably, the number of the venting holes 133b may be greater than that of the outermost venting holes 133a by one or two. In addition, the length of the outermost venting hole 133a may be 0.5 to 0.8 times greater than the sum of the lengths of the venting holes 133b aligned in the long side direction. Accordingly, the inner interval section 138 and the outermost interval section 137 between the venting holes 133b may be arranged at misaligned positions in the long side direction to secure the rigidity of the top plate 130, and the area provided with the venting holes 133a and 133b may be secured to sufficiently exert the venting function.

The series of vents 135 is constituted by arranging the venting slits 131b of the venting slit group 131 and the venting holes 133b of the venting hole group 133 in line along the long side direction of the top plate 130. A plurality of series of vents 135 are arranged in the short side direction of the top plate 130. Accordingly, a plurality of series of vents 135 may be arranged in line above the battery bank 115 defined as the section between adjacent thermal barriers 113. Gas and flame generated from each battery bank 115 may be discharged through the corresponding series of vents 135.

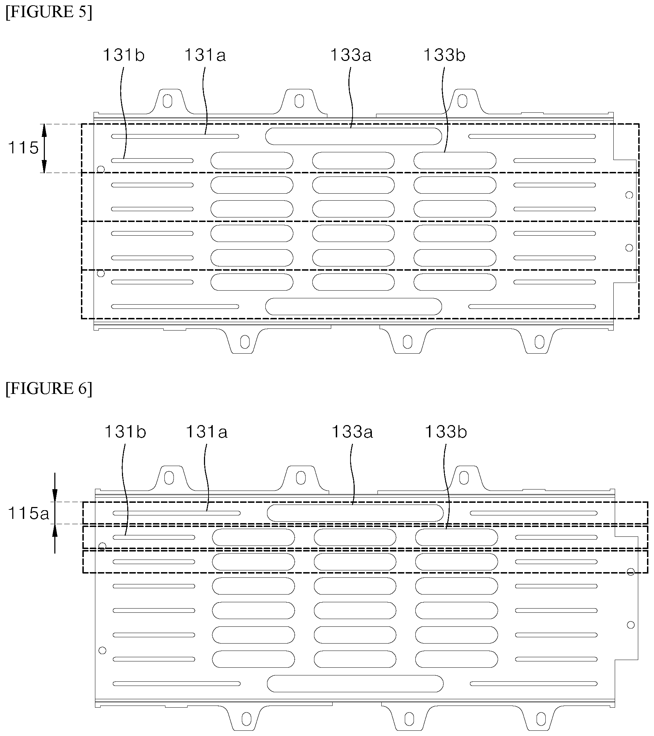

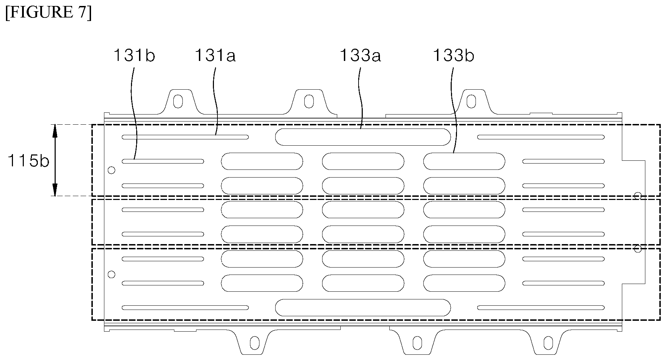

FIG. 5 is a plan view schematically illustrating a structure having two series of vents corresponding to one battery bank in a battery module according to the present invention, FIG. 6 is a plan view schematically illustrating a structure having one series of vents corresponding to one battery bank in a battery module according to the present invention, and FIG. 7 is a plan view schematically illustrating a structure having three series of vents corresponding to one battery bank in a battery module according to the present invention.

Referring to FIGS. 5 and 7, two or more series of vents 135 may be arranged to correspond to battery banks 115, respectively. For example, when the battery bank 115 is wide enough in the short side direction such that three to four battery cells 111 are installed in one battery bank 115, two series of vents 135 may correspond to one battery bank 115 as shown in FIG. 5. In addition, when the battery bank 115 is wider than the one shown in FIG. 5 in the short side direction, three series of vents 135 may correspond to one battery bank 115 as shown in FIG. 7.

Referring to FIG. 6, one series of vents 135 may correspond to one battery bank 115. For example, when one to two battery cells 111 are installed in one battery bank 115, one series of vents 135 may correspond thereto.

The number of the series of vents 135 may be appropriately changed considering the number of battery cells 111 installed in the battery bank 115 and the size of the battery cells 111.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising a module housing provided with a plurality of battery bank accommodating one or more battery cells therein, respectively, and a top plate provided with long sides and short sides and covering an upper portion of the module housing, the battery module further comprising:
a pair of venting slit groups arranged on both sides of the top plate in a long side direction, respectively, each of the pair of venting slit groups including a plurality of venting slits arranged in a short side direction; and
at least one venting hole group arranged between the pair of venting slit groups in the long side direction, each of the at least one venting hole group including a plurality of venting holes,
wherein a short side direction width of each of the plurality of venting slits of the pair of venting slit groups is narrower than a short side direction width of each of the venting holes of the at least one venting hole group.

2. The battery module of claim 1, wherein the plurality of venting slits of the pair of venting slit groups and the plurality of venting holes of the at least one venting hole group are arranged in series along the long side direction of the top plate.

3. The battery module of claim 1, wherein, within the pair of venting slit groups, long side direction lengths of outermost venting slits with respect to the short side direction of the top plate are longer than a long side direction length of at least one venting slit arranged between the outermost venting slits.

4. The battery module of claim 1, wherein, within the pair of venting slit groups, long side direction lengths of outermost venting slits with respect to the short side direction of the top plate are longer than long side direction lengths of venting slits arranged between the outermost venting slits.

5. The battery module of claim 1, wherein, within the at least one venting hole group, long side direction lengths of outermost venting holes with respect to the short side direction of the top plate are longer than a long side direction length of at least one venting hole arranged between the outermost venting holes.

6. The battery module of claim 1, wherein, within the at least one venting hole group , long side direction lengths of outermost venting holes with respect to the short side direction of the top plate are longer than long side direction lengths of venting holes arranged between the outermost venting holes.

7. The battery module of claim 1, wherein outermost interval sections defined as interval portions extending in the long side direction between outermost venting slits and outermost venting holes arranged at two widthwise end portions of the top plate and inner interval sections defined as interval portions extending in the long side direction between the plurality of venting slits and the plurality of venting holes arranged between the outermost venting slits and the outermost venting holes are not overlapped with each other in the long side direction.

8. The battery module of claim 1, wherein a plurality of series of vents are arranged along the short side direction of the top plate, the plurality of series of vents comprising the plurality of venting slits of the pair of venting slit groups and the plurality of venting holes of the at least one venting hole group are arranged in series along the long side direction of the top plate.

9. The battery module of claim 8, wherein one series of vents corresponds to one battery bank.

10. The battery module of claim 8, wherein two or more series of vents correspond to one battery bank.
